# EUROPEAN PATENT APPLICATION

(11) **EP 4 772 921 A1**
(43) Date of publication of application: **08.07.2026**
(21) Application number: 24857584.7
(22) Date of filing: 04.01.2024
(51) Int. Cl.: G02B 6/42

(54) **OPTICAL MODULE HAVING UNLOCKING EARLY WARNING FUNCTION, AND USE METHOD**

(30) Priority: 30.08.2023 CN 202311120798
(71) Applicant: Accelink Technologies Co., Ltd., Wuhan, Hubei 430000 (CN)
(72) Inventor: ZHOU, Yun, Wuhan Hubei 430000 (CN); QUAN, Benqing, Wuhan Hubei 430000 (CN); SHENG, Yubang, Wuhan Hubei 430000 (CN)
(74) Representative: Frenkel, Matthias Alexander
(86) International application number: PCT/CN2024/070665
(87) International publication number: WO 2025/044025

(57) **Abstract**

Disclosed are an optical module with an unlock warning function and a method of use thereof. A lever is provided on a base of the optical module, with an inclined groove formed. A handle for controlling the optical module to be inserted and unplugged matches the inclined groove to control a chamfer on the lever to rise or descend by controlling the movement of the handle relative to the base, and the chamfer is configured to match a slot of a metal shielding cage to fix and unlock the optical module, such that the optical module is controlled to be fixed and unlocked by controlling the handle. A contact point is arranged at a lower end of the chamfer, and when the chamfer descends, the contact point becomes electrically connected to a PCB in the optical module, whereby unlock warning is transmitted before the optical module is completely unplugged, preventing signal loss caused by its mistaken extraction.

## Description

### CROSS-REFERENCE TO BE RELATED APPLICATIONS

This application claims priority to Chinese patent application No. 202311120798.9, titled "OPTICAL MODULE WITH UNLOCK WARNING FUNCTION AND METHOD OF USE THEREOF", filed on August 30, 2023, the disclosure of which is incorporated by reference in its entirety.

### TECHNICAL FIELD

The present disclosure relates to the field of optical communication, and particularly relates to an optical module with an unlock warning function and a usage method thereof.

### BACKGROUND

In conventional technology, when an optical module is inserted into a slot of a metal shielding cage for normal data transmission, sudden extraction due to an external force may occur. In such cases, the host often fails to respond promptly, potentially causing signal loss from unintentional extraction.

Given this, overcoming the shortcomings of the prior art is an urgent issue in this technical field.

### SUMMARY

The technical problem to be addressed by the present disclosure is how to promptly alert the host in the event that the optical module is at unintentional extraction, so as to initiate signal buffering and interruption preemptively to avoid signal loss.

The present disclosure adopts the following technical solutions.

In the first aspect, an optical module with an unlock warning function, comprising: a handle 1, a lever 2, a base 3, and a PCB assembly 4, wherein:
the handle 1 is slidably and guidably connected with the base 3, and a connecting rod 12 is provided on the handle 1;
the lever 2 is pivoted to the base 3; a first end of the lever 2 is provided with an inclined groove 21, and the connecting rod 12 is located in the inclined groove 21; an upper surface of a second end of the lever 2 is provided with a chamfer 22 which is configured to match and lock with a slot of a metal shielding cage, while a lower surface of the second end of the lever 2 is provided with a first contact point 23;
the PCB assembly 4 is arranged inside the base 3 and below the second end of the lever 2;
when the handle 1 is guided to move outward relative to the base 3, the connecting rod 12 drives an upper end of the inclined groove 21 upward, whereby the first end rises and the second end descends, enabling the chamfer 22 to be unlocked with the slot of the metal shielding cage, and bringing the first contact point 23 to be in contact with the PCB assembly 4 to trigger an unlock warning.

Preferably, the PCB assembly 4 comprises a contact pad 41 and a PCB board 42, wherein:
an upper surface of the contact pad 41 is provided with a second contact point 43 which is located below the first contact point 23 and is electrically connected to the PCB board 42 through a metal strip 44;
when the second end descends, the first contact point 23 comes into contact with the second contact point 43, establishing electrical connectivity to the PCB board 42.

Preferably, that the lever 2 is pivoted to the base 3 specifically comprises that:
the lever 2 is provided with rotating shafts 24 on both sides;
one end of the base 3 is an optical interface end 31 which is configured to slidably and guidably connected with the handle 1, and an upper surface of the optical interface end 31 is provided with a clearance cavity 311, with U-shaped recesses 312 provided on both sides of an inner wall of the clearance cavity 311;
the lever 2 is arranged inside the clearance cavity 311, with the rotating shaft 24 located in the U-shaped recess 312, and the first end of the lever 2 faces away from the PCB assembly 4, while the second end of the lever 2 faces towards the PCB assembly 4.

Preferably, the first end of the lever 2 being provided with an inclined groove 21, specifically comprises that:
the inclined groove 21 is formed on an end face of the first end of the lever 2, extending to both sides of the lever 2, with a depth of the inclined groove 21 increasing towards a middle of the lever 2, and the inclined groove 21 is inclined downward relative to a horizontal plane;
when the handle 1 is guided to move relative to the base 3, the connecting rod 12 slides in the inclined groove 21, driving the first end of the lever 2 to rise or descend.

Preferably, the handle 1 being slidably and guidably connected with the base 3, specifically comprises that:
one end of the handle 1 is a closure frame 11 which is fitted to the optical interface end 31 of the base 3;
barrier walls 111 are provided on both sides of an upper end surface of the enclosure frame 11, and guiding grooves 313 are provided on both sides of the upper surface of the optical interface end 31, wherein the barrier walls 111 are inserted into the guiding grooves 313, and when the enclosure frame 11 moves relative to the optical interface end 31, the barrier walls 111 slide within the guiding grooves 313.

Preferably, a spring 314 is further provided between a side of the barrier wall 111 facing an outside of the handle 1 and an inner wall of the guiding groove 313.

Preferably, bumps 315 are also provided on both sides of the optical interface end 31, with corresponding guiding holes 112 provided on both sides of the enclosure frame 11, wherein when the enclosure frame 11 is muff-coupled to the optical interface end 31, the bumps 315 become matched with the guiding holes 112; and
when the enclosure frame 11 is guided to move relative to the optical interface end 31, the bumps 315 move in the guiding hole 112.

Preferably, two support arms 113 are arranged, facing each other, on an inner end face of the enclosure frame 11, inserted into the clearance cavity 311 at an upper end of the optical interface end 31, and are provided with through holes which are configured to connect with the two ends of the connecting rod 12.

Preferably, the upper end of the enclosure frame 11 is also provided with a cover plate 5, an end face of which is provided with a fitting hole 51, and the end face of the optical interface end 31 is provided with a corresponding inclined bump 316, with which the fitting hole 51 is matched to fix the cover plate 5;
the cover plate 5 is configured to cover the enclosure frame 11 and an upper end of the lever 2, preventing the enclosure frame 11 and the lever 2 from falling off from the optical interface end 31.

In the second aspect, a method of use of an optical module with an unlock warning function, applied to the above-mentioned optical module with an unlock warning function, and comprising:
guiding the handle 1 to move outward relative to the base 3, moving the connecting rod 12 within the inclined groove 21, whereby the first end of the lever 2 rises and the second end of the lever 2 synchronously descends, enabling the chamfer 22 on the upper surface of the second end of the lever 2 to be unlocked from the slot of the metal shielding cage, and synchronously bringing the first contact point 23 on the lower surface of the second end of the lever 2 to electrically connect to the PCB assembly 4;
lowering down a high level of the PCB assembly 4 by a low level of the first contact point 23 and sending a warning signal to an MCU;
performing signal transmission buffering and/or interruption by the MCU.

The present disclosure provides an optical module with an unlock warning function and a method of use thereof. Specifically, a lever is arranged on the base of the optical module, and an inclined groove is arranged in the lever to match a handle for controlling the insertion and extraction of the optical module with the inclined groove of the lever, then by controlling the movement of the handle relative to the base, the rising or descending of the chamfer on the lever is controlled, while the chamfer is configured to cooperate with the slot of the metal shielding cage to achieve the fixation and unlocking of the optical module, whereby the fixation and unlocking of the optical module are controlled by controlling the handle. On the other hand, there are also contact points at the lower end of the chamfer, and when the chamfer of the lever descends, the contact points are electrically connected to the PCB board in the optical module, so as to transmit an unlock warning in advance before the optical module is completely unplugged, preventing signal loss caused by unintentional extraction of the optical module.

### BRIEF DESCRIPTION OF THE DRAWINGS

In order to provide a clearer explanation of the technical solution of the embodiments of the present disclosure, a brief introduction will be given below to the accompanying drawings required for use in the embodiments of the present disclosure. It is obvious that the drawings described below are only some embodiments of the present disclosure, and for those skilled in the art, other drawings can be obtained based on these drawings without creative labor.
Figure 1 is a schematic diagram of the structure of an optical module with an unlock warning function according to an embodiment of the present disclosure;
Figure 2 is a schematic diagram of the structure of an optical module with an unlock warning function according to an embodiment of the present disclosure, with some parts of the base concealed;
Figure 3 is a partial schematic diagram of an optical module with an unlock warning function according to an embodiment of the present disclosure;
Figure 4 is a schematic diagram of the structure of a lever of an optical module with an unlock warning function according to an embodiment of the present disclosure;
Figure 5 is a schematic diagram of the structure of a lever of another optical module with an unlock warning function according to an embodiment of the present disclosure;
Figure 6 is a schematic diagram of the structure of the handle of another optical module with an unlock warning function according to an embodiment of the present disclosure;
Figure 7 is a schematic diagram of the structure of the handle and lever of another optical module with an unlock warning function according to an embodiment of the present disclosure;
Figure 8 is a side view of an optical module with an unlock warning function according to an embodiment of the present disclosure, with parts of the base concealed;
Figure 9 is a side view of another optical module with an unlock warning function according to an embodiment of the present disclosure, with parts of the base concealed;
Figure 10 is a partial schematic diagram of an optical module with an unlock warning function according to an embodiment of the present disclosure, with parts of the base concealed;
Figure 11 is a partial schematic diagram of a side view of an optical module with an unlock warning function provided in an embodiment of the present disclosure, with parts of the base concealed;
Figure 12 is a schematic diagram of the structure of a lever of another optical module with an unlock warning function according to an embodiment of the present disclosure;
Figure 13 is a partial schematic diagram of an optical module with an unlock warning function according to an embodiment of the present disclosure, with the handle and the lever concealed;
Figure 14 is a partial schematic diagram of another optical module with an unlock warning function according to an embodiment of the present disclosure, with the handle and the lever concealed;
Figure 15 is a schematic diagram of the structure of the handle of another optical module with an unlock warning function according to an embodiment of the present disclosure;
Figure 16 is a partial schematic diagram of another optical module with an unlock warning function according to an embodiment of the present disclosure, with the handle concealed;
Figure 17 is a partial schematic diagram of another optical module with an unlock warning function according to an embodiment of the present disclosure, with the lever concealed;
Figure 18 is a partial schematic diagram of an optical module with an unlock warning function according to an embodiment of the present disclosure, with the enclosure frame concealed;
Figure 19 is a partial schematic diagram of an optical module with an unlock warning function according to an embodiment of the present disclosure, with the cover plate concealed;
Figure 20 is a schematic diagram of the structure of the cover plate of another optical module with an unlock warning function according to an embodiment of the present disclosure;
Figure 21 is a schematic diagram of the structure of the optical interface end of an optical module with an unlock warning function according to an embodiment of the present disclosure;
Figure 22 is a flowchart of a method for using an optical module with an unlock warning function according to an embodiment of the present disclosure;

List of reference numerals
1 handle; 11 enclosure frame; 111 barrier wall; 112 guiding hole; 113 support arm; 12 connecting rod;
2 lever; 21 inclined groove; 22 chamfer; 23 first contact point; 24 rotating shaft;
3 base; 31 optical interface end; 311 clearance cavity; 312 U-shaped recess; 313 guiding groove; 314 spring; 315 bump; 316 inclined bump; 317 limit pivot;
4 PCB assembly; 41 contact pad; 42 PCB board; 43 second contact point; 44 metal strip;
5 cover plate; 51 cooperating hole.

### DETAILED DESCRIPTION

In order to clarify the purpose, technical solution, and advantages of the present disclosure further, the following will provide further detailed explanations of the present disclosure in conjunction with the accompanying drawings and embodiments. It should be understood that the specific embodiments described herein are only used to explain the present disclosure and are not intended to limit the present disclosure.

In the description of the present disclosure, the terms "inside", "outside", "longitudinal", "lateral", "upper", "lower", "top", "bottom", etc. indicate orientations or positional relationships based on the orientations or positional relationships shown in the accompanying drawings, only for the convenience of describing the present disclosure and not to require the present disclosure to be constructed and operated in a specific orientation, and therefore should not be understood as limiting the present disclosure.

The terms "first", "second", etc. used in the present disclosure are for descriptive purposes only and should not be understood as indicating or implying relative importance or implying the number of technical features indicated. Thus, features described with "first", "second", etc. may explicitly or implicitly include one or more of these features. In the description of this application, unless otherwise specified, the meaning of "multiple" refers to two or more than two.

In this application, unless otherwise specified and limited, the term "connection" should be interpreted broadly. For example, "connection" can be a fixed connection, a detachable connection, or an integrated structure; it can be directly connected or indirectly connected through an intermediate medium. In addition, the term "coupling" can refer to an electrical connection that enables signal transmission.

In addition, the technical features involved in the various embodiments of the present disclosure described below can be combined with each other as long as they do not conflict with each other.

### Embodiment 1

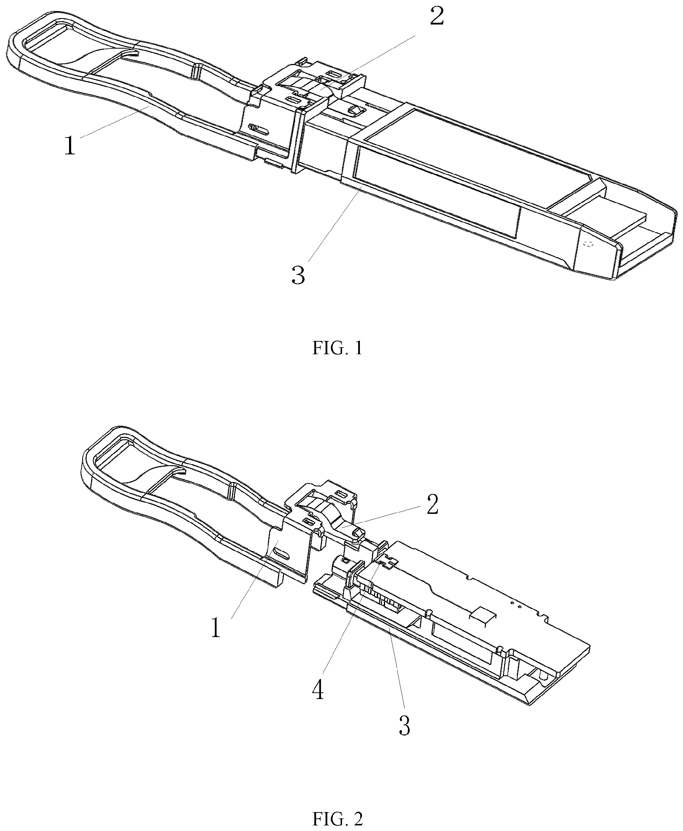

Embodiment 1 of the present disclosure provides an optical module with a function that provides an alert when it is about to be unlocked, as shown in Figures 1 and 2, comprising a handle 1, a lever 2, a base 3, and a PCB assembly 4, wherein Figure 2 is a schematic diagram of the device with parts of the base 3 concealed.

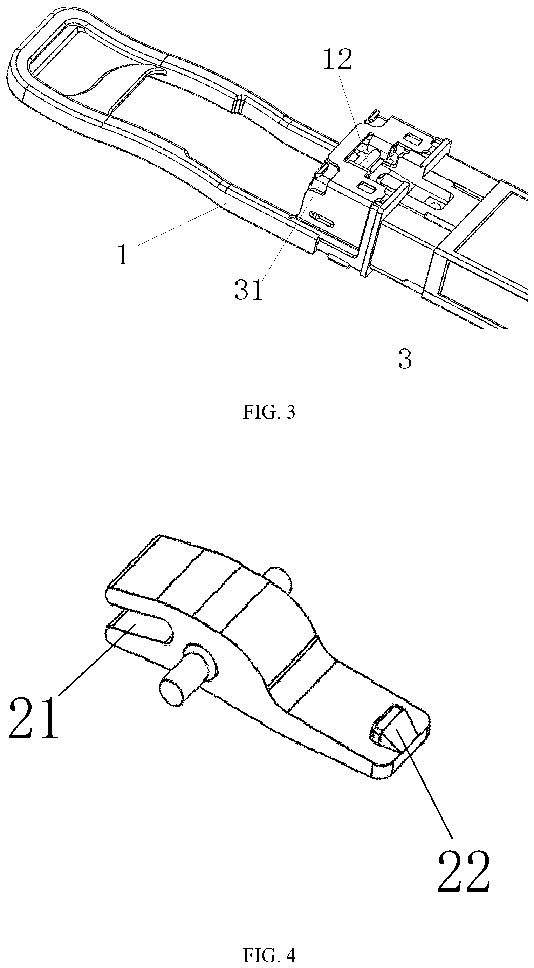

As shown in Figure 3, the handle 1 is slidably and guidably connected with the base 3, and a connecting rod 12 is provided on the handle 1.

As shown in Figure 3, in this embodiment, two ends of the base 3 are respectively an optical interface end 31 and an electrical interface end. The handle 1 is connected to the optical interface end 31 and is configured to provide a handle for applying a force when inserting and unplugging the optical module. The slidable and guidable connection can be that the handle 1 can slide relative to the base 3 along a length direction of the optical module while being connected to the base 3. When the handle 1 is connected to the optical interface end 31, the connecting rod 12 is located at an upper end of the optical interface end 31.

As shown in Figures 4-8, the lever 2 is pivoted to the base 3; a first end of the lever 2 is provided with an inclined groove 21, and the connecting rod 12 is located inside the inclined groove 21; an upper surface of a second end of the lever 2 is provided with a chamfer 22, which is used to be matched and locked with a slot of an metal shielding cage, and a lower surface of the second end of the lever 2 is provided with a first contact point 23.

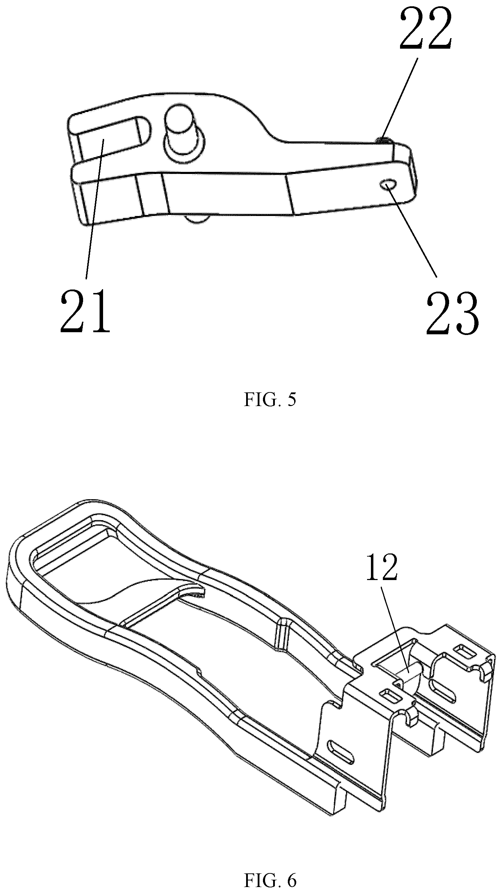

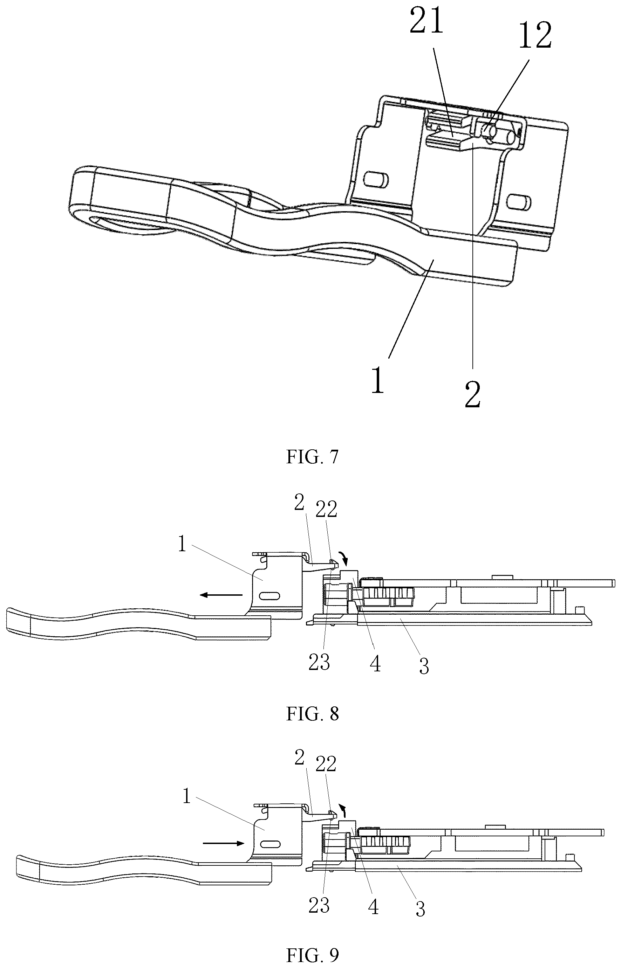

In this embodiment, the lever 2 is pivoted to an upper end of the optical interface end 31 and can rotate to a certain extent around the axis connection position, and a first end of the lever 2 faces the handle 1, while a second end of the lever 2 faces away from the handle 1. As shown in Figures 4 and 5, the inclined groove 21 is arranged at an end face of the first end of the lever 2, and a groove depth of the inclined groove 21 increases towards a middle of the lever 2. The inclined groove 21 has a preset downward inclination angle compared to the horizontal direction, as shown in Figures 6 and 7. The connecting rod 12 is located inside the inclined groove 21, as shown in Figures 8 and 9. An arrow next to the handle 1 in Figures 8 and 9 represents a direction of movement of the handle 1, and an arrow of the lever 2 is the corresponding direction of rotation. When the handle 1 moves horizontally relative to the optical interface end 31, the connecting rod 12 slides along the extension direction of the inclined groove 21. At the same time, due to a downward inclination of the inclined groove 21, when the handle 1 moves horizontally relative to the optical interface 31, the connecting rod 12 abuts against an upper groove surface of the inclined groove 21 and exerts an upward force on the upper groove surface of the inclined groove 21. Thus, the first end of the lever 2 is lifted and the second end of lever 2 is lowered, completing the unlocking between the optical module and the slot of the metal shielding cage; and when the handle 1 moves horizontally inward relative to the optical interface end 31, the connecting rod 12 abuts against a lower groove surface of the inclined groove 21 and exerts a downward force on the lower groove surface of the inclined groove 21, such that the first end of the lever 2 descends and the second end of the lever 2 rises. It should be noted that when the handle 1 is connected to the optical interface end 31 and is not subjected to an external force, the connecting rod 12 is located at the innermost end of the inclined groove 21. At this time, the first end of the lever 2 is located at the lowest position, and the second end of the lever 2 is located at the highest position.

As shown in Figures 8 and 9, the chamfer 22 is located on the upper surface of the second end. A side of the chamfer 22 facing an inner side of the base 3 is an inclined surface, and a side of the chamfer 22 facing an outer side of the base 3 is a vertical surface. When an inward force is applied to the handle 1 to insert the optical module into the slot of the metal shielding cage, an upper groove wall of the slot of the metal shielding cage advances along an inclined surface of the chamfer 22, pressing the second end of the lever 2 downward. When the chamfer 22 completely enters the slot of the metal shielding cage, the second end tilts upward and rebounds, and a vertical surface of the chamfer 22 abuts against an inner wall of the slot of the metal shielding cage. The optical module cannot be released outward relative to the slot of the metal shielding cage, thereby locking the optical module matched with the slot of the metal shielding cage. The first contact point 23 is arranged on the lower surface of the second end of the lever 2, and is configured to subsequently trigger an unlock warning. In this embodiment, the first contact point 23 is a conductive metal disc.

As shown in Figures 4-8, the PCB assembly 4 is arranged inside the base 3 and located below the second end of the lever 2. When the handle 1 is guided to move outward relative to the base 3, the connecting rod 12 lifts the upper end of the inclined groove 21, causing the first end to rise and the second end to descend, then causing the chamfer 22 to unlock the slot of the metal shielding cage, and the first contact point 23 to contact the PCB assembly 4 to trigger an unlock warning.

As shown in Figures 4-8, in addition to the optical interface end 31 and the electrical interface end at both ends of the base 3, the middle of the base 3 is configured to arrange the PCB assembly 4 and other interface components. The PCB assembly 4 comprises the PCB board 42 and other related components. Taking Figure 8 as an example, the PCB assembly 4 is arranged below the second end of the lever 2, and when the second end of the lever 2 rise, it means that the optical module is locked with the slot of the metal shielding cage or the optical module is not inserted, and no corresponding unlocking warning is required. At this time, the first contact point 23 is not in contact with the PCB assembly 4, and no electrical connection will be established, and the PCB assembly 4 will not transmit an unlocking warning to the host. However, when the second end of the lever 2 descends, it indicates that the optical module is inserted or unlocked. In order to prevent signal loss caused by unintentional extraction of the optical module, an unlocking warning is required when the optical module may be extracted, and the host buffers and/or interrupts signal transmission in advance. Therefore, the first contact point 23 needs to be in contact with the PCB assembly 4 to establish an electrical connection, and the PCB assembly 4 transmits an unlocking warning to an MCU (microcontroller unit), and the host initiate signal transmission buffering and/or interruption accordingly.

It should be noted that the descending of the second end of the lever 2 can only represent the unlocking between the optical module and the slot of the metal shielding cage, and cannot represent that the optical module has been extracted from the slot of the metal shielding cage. The actual extraction must be the disconnection of the optical or electrical interface of the optical module from the corresponding slot, and the unlocking step must be done before the disconnection. Therefore, it can ensure that the host is informed before the disconnection that the optical module may be mistakenly extracted, and thus buffers and/or interrupts signal transmission in advance.

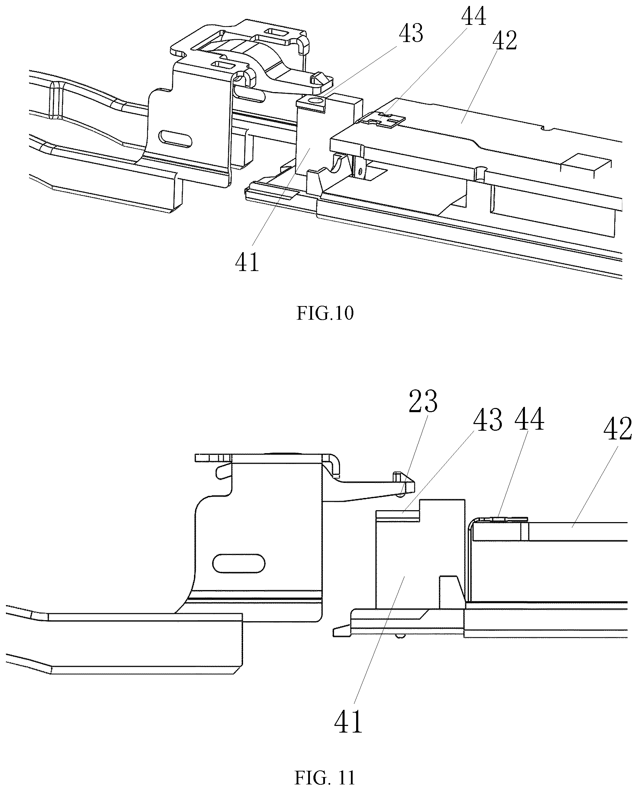

In this embodiment, a lever 2 is provided on the base 3 of the optical module, and an inclined groove 21 is provided in the lever 2. The handle 1 for controlling the insertion and extraction of the optical module is matched with the inclined groove 21 of the lever 2. By controlling the movement of the handle 1 relative to the base 3, the rising or descending of the chamfer 22 on the lever 2 is controlled. The chamfer 22 is configured to match with the slot of the metal shielding cage to achieve the fixation and unlocking of the optical module. Therefore, the fixation and unlocking of the optical module are controlled by controlling the handle 1. On the other hand, a lower end of the chamfer 22 is also provided with a contact point. When the chamfer 22 of the lever 2 descends, as shown in Figure 10, the contact point is electrically connected to the PCB board 42 in the optical module, so as to transmit an unlocking warning in advance before the optical module is completely extracted, to prevent signal loss caused by unintentional extraction of the optical module.

As shown in Figures 8 and 9, the lever 2 of this structure is arranged at a high position on the optical interface end 31 of the optical module. Due to the fact that the PCB board 42 is usually provided at a lower position on the base 3 of the optical module, it may be difficult for it to directly contact the PCB board 42 when the second end of the lever 2 descends. Therefore, this embodiment achieves electrical connection between the first contact point 23 and the PCB board 42 by providing additional components that are directly electrically connected to the PCB board 42, and require the components to be located below the second end of the lever 2 for opposite connection with the first contact 23. Therefore, this embodiment also involves the following design.

As shown in Figures 10 and 11, the PCB assembly 4 comprises a contact pad 41 and a PCB board 42.

The contact pad 41 and the PCB board 42 are both located inside the base 3, and an upper surface of the contact pad 41 is provided with a second contact point 43, which is located below the first contact point 23 and is connected to the PCB board 42 through a metal strip 44; when the second end descends, the first contact point 23 comes into contact with the second contact point 43, and the first contact point 23 becomes electrically connected to the PCB board 42.

As shown in Figures 10 and 11, the PCB board 42 needs to be extended to the electrical interface end, so a length of the PCB board 42 is often not enough to ensure it reaches below the first contact point 23. Moreover, the components on the PCB board 42 are compact, and it is usually not possible to directly provide other contact points on the PCB board 42 for electrical connection with the first contact point 23. Therefore, in this embodiment, the contact pad 41 is arranged in a direction of the PCB board 42 facing the optical interface end 31. It is worth mentioning that in this embodiment, an optical interface component is connected to the lower surface of the PCB board 42 and provided at the lower end of the PCB board 42. Two joints of the optical interface face the optical interface end 31 side by side, and the contact pad 41 is arranged at a gap in the middle of the two optical interfaces, whereby internal space of the optical module is saved and the integration level inside the optical module is further improved. From Figures 10 and 11, it can be seen that the contact pad 41 is arranged on an inner surface of the base 3, and a vertical height of the contact pad 41 is directly below the first contact point 23. An upper end of the contact pad 41 is provided with a second contact point 43, which is made of a conductive material, while the contact pad 41 is made of an insulating material, and the second contact point 43 is wired inside the contact pad 41 and extends to the side wall of the contact pad 41, and then connected to the PCB board 42 through an FPC flexible circuit board from a side wall of the contact pad 41. The PCB board 42 is provided with a corresponding warning module, and the FPC flexible circuit board is wired on the PCB board 42 and connected to the warning module. When the first contact point 23 and the second contact point 43 come into contact, due to the fact that the first contact point 23 is at a side of the handle 1 and is actually grounded, it is at a low level. Therefore, when the first contact point 23 is connected to the second contact point 43, the original high level on the PCB board 42 is lowered, and the warning module on the PCB board 42 feeds back the corresponding level changes to the control terminal host, and the host determines that there is a risk of the optical module being mistakenly unplugged, and correspondingly buffers and/or interrupts signal transmission.

As shown in Figures 10 and 11, when the optical module is in an unplugged state or in a normal locked state, the second end of the lever 2 rises normally. At this time, there is a certain gap between the first contact point 23 and the second contact point 43, and they do not contact each other, so there will be no electrical connection. However, when the second end of the lever 2 descends, a vertical height of the first contact point 23 decreases and it connects with the second contact point 43, achieving the corresponding electrical connection.

It is worth mentioning that the connection between the PCB board 42 and the second contact point 43, in addition to the connection method of the FPC flexible circuit board in Figure 11, can also be achieved by first routing the wire in the contact pad 41 through the second contact point 43 until it reaches the side wall of the contact pad 41, and then providing a socket at the corresponding position on the side wall of the contact pad 41, and providing corresponding inserting card on the PCB board 42, whereby the PCB board 42 and the contact pad 41 are connected by plug-in components to achieve electrical connection between the PCB board 42 and the second contact point 43.

In this embodiment, due to the need to lock and unlock the optical module and the slot of the metal shielding cage through the handle 1 and the lever 2, space needs to be provided for the lever 2 to rotate, while minimizing the space occupied by the lever 2. On this basis, the handle 1 needs to be adapted and connected to the optical interface end 31 and the lever 2 simultaneously. Therefore, this embodiment also involves the following design.

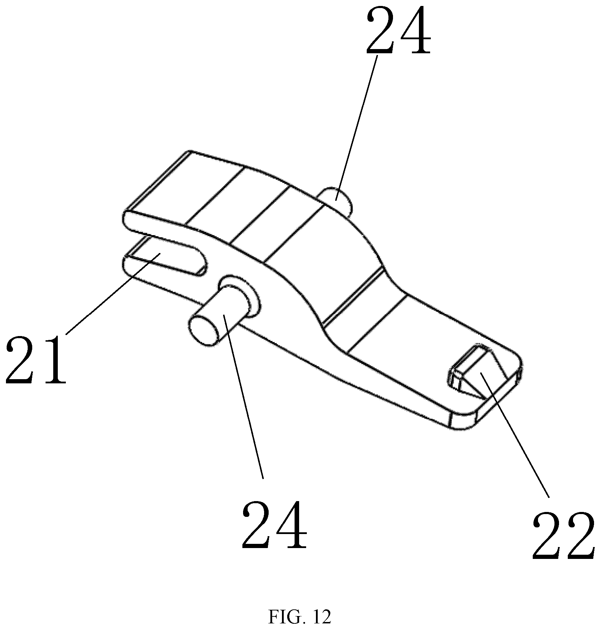

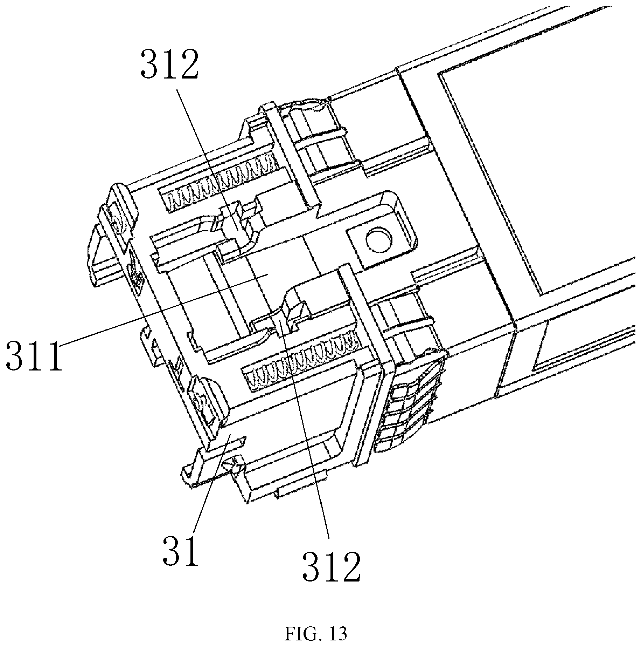

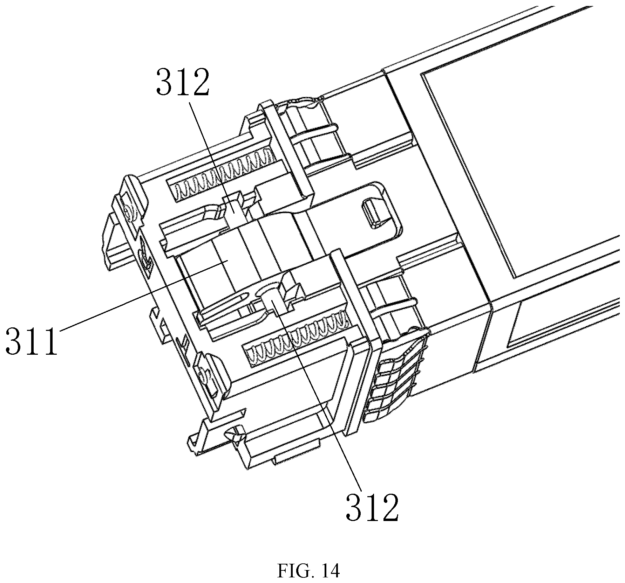

As shown in Figures 12-14, the lever 2 is pivoted to the base 3, specifically comprising that:
the lever 2 is equipped with rotating shafts 24 on both sides; one end of the base 3 is an optical interface end 31, which is configured to slidably and guidably connect with the handle 1; the upper surface of the optical interface end 31 is provided with a clearance cavity 311, on both sides of the inner wall of which are also provided with U-shaped recesses 312; the lever 2 is arranged inside the clearance cavity 311, and the rotating shaft 24 is located in the U-shaped recess 312, the first end of the lever 2 faces away from the PCB assembly 4, and the second end of the lever 2 faces towards the PCB assembly 4.

As shown in Figure 12, in this embodiment, the rotating shaft 24 is cylindrical and is arranged near the middle on both sides of the lever 2; the clearance cavity 311 is arranged at the middle of the upper end of the optical interface end 31. The outer side of the optical interface end 31 refers to a side where the optical interface is oppositely connected to the external optical fiber, and the inner side of the optical interface end 31 refers to a side facing the inside of the optical module.

On the other hand, in order to unlock the optical module and provide corresponding unlocking warning when the handle 1 is pulled outward, this embodiment needs to design the inclined groove 21 in the lever 2 accordingly to ensure that the second end of the lever 2 can rotate downward when the handle 1 is pulled outward.

As shown in Figure 12, the inclined groove 21 is arranged on the end face of the first end of the lever 2, and is connected to both sides of the lever 2. A depth of the inclined groove 21 extends towards the middle of the lever 2. When the lever 2 is located in the clearance cavity 311, the inclined groove 21 is inclined downward relative to the horizontal plane; when the enclosure frame 11 is guided to move relative to the optical interface end 31, the connecting rod 12 slides in the inclined groove 21, driving the first end of the lever 2 to tilt upward or downward.

As shown in Figure 12, when the second end descends, the first end will correspondingly tilt upwards. Therefore, when the handle 1 is pulled outward, the handle 1 applies a force to the first end to make it tilt upwards. The connecting rod 12 of the handle 1 is arranged in the inclined groove 21 of the first end, and an opening of the inclined groove 21 is located on the end face of the first end, and the groove depth increases toward the middle of the inclined groove 21. At the same time, the inclined groove 21 itself tilts downwards. Therefore, when the connecting rod 12 moves outward in the horizontal direction, it will abut against the upper groove surface of the inclined groove 21. At this time, the upper groove surface of the inclined groove 21 is subjected to a certain upward force. Therefore, the first end of lever 2 will tilt upwards until the groove depth of the inclined groove 21 is oriented parallel to the horizontal plane, and the connecting rod 12 slides from the innermost end to the outermost end of the inclined groove 21.

In this embodiment, the optical module is rectangular, and the outer contour of the optical interface end 31 is also roughly rectangular. Therefore, in order to ensure the stability of the connection between the handle 1 and the optical interface end 31, the part where the handle 1 is oppositely connected to the optical interface end 31 in this embodiment should be a frame, which covers the optical interface end 31 in a semi enclosed manner. At the same time, the frame should be able to be guided to move relative to the optical interface end 31 to achieve the effect of the handle 1 on the lever 2, while ensuring the connection. Therefore, this embodiment also involves the following design.

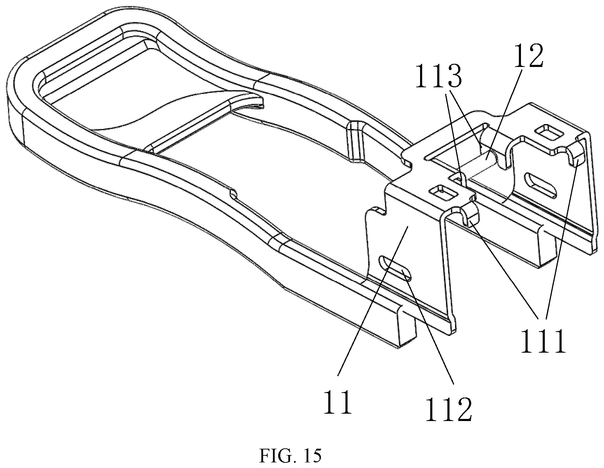

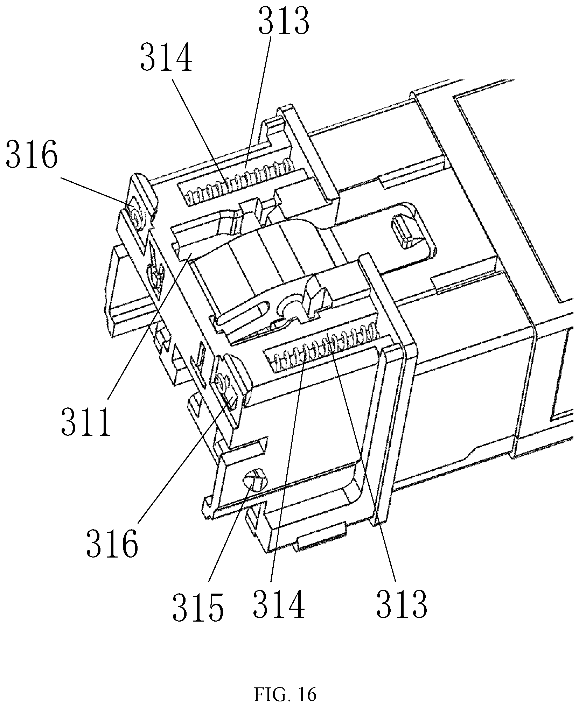

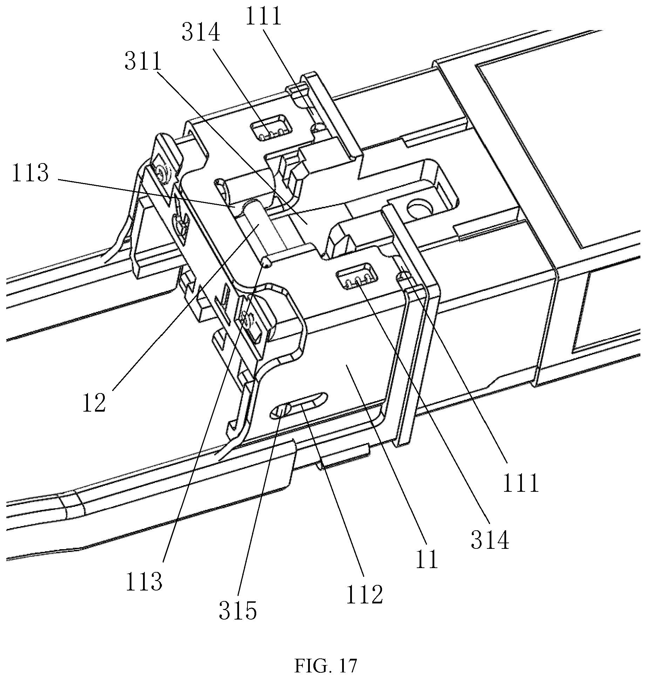

As shown in Figures 15-17, one end of the handle 1 is a closure frame 11, which is muff-coupled to the optical interface end 31 of the base 3; barrier walls 111 are arranged on both sides of the upper end face of the enclosure frame 11. Guiding grooves 313 are arranged on both sides of the clearance cavity 311 on the upper surface of the optical interface end 31. The barrier walls 111 are inserted in the guiding grooves 313. When the enclosure frame 11 moves relative to the optical interface end 31, the barrier walls 111 slide inside the corresponding guiding grooves 313. A spring 314 is also provided between a side of the barrier wall 111 facing the handle and the inner wall of the guiding groove 313.

Two support arms 113 are arranged opposite each other on the inner end face of the enclosure frame 11, and are inserted into the clearance cavity 311. The support arms 113 are provided with through holes which are used to connect with the two ends of the connecting rod 12.

As shown in Figures 15-17, bumps 315 are also provided on both sides of the optical interface end 31, and corresponding guiding holes 112 are provided on both sides of the enclosure frame 11. When the enclosure frame 11 is fitted onto the optical interface end 31, the bumps 315 becomes matched with the guiding holes 112; and when the enclosure frame 11 is guided to move relative to the optical interface end 31, the bump 315 moves in the guiding hole 112.

As shown in Figures 15-17, the enclosure frame 11 comprises at least three faces, i.e. two side faces and a top face. The two side faces are located on both sides of the enclosure frame 11, and the top face is located at the upper end of the enclosure frame 11. The two side faces are connected by the top face. The fixing of the enclosure frame 11 in vertical and horizontal directions is achieved through cooperation of the bumps 315 on the two sides with the guiding holes 112 on both sides of the optical interface end 31, and through cooperation of the barrier wall 111 on the top face with the guiding groove 313 on the upper end of the optical interface end 31, and through cooperation of the three faces. It should be noted that due to the need for relative guiding movement of the enclosure frame 11 relative to the optical interface end 31, both the guiding hole 112 and the guiding groove 313 provide spaces for displacement in the direction of the pulling force of the handle 1, for the bump 315 and the barrier wall 111 to move. In addition, a peripheral baffle is also provided on the inner periphery of the optical interface end 31 to block the enclosure frame 11 and limit its position inside the optical interface end 31.

As shown in Figures 15-17, it should be noted that due to the chamfer 22 configured to lock the optical module, that is, the second end of the lever 2 needs to remain tilting upward in the normal state, so as to maintain the locking state of the optical module and avoid continuous opposite connection between the first contact point 23 and the second contact point 43, even if the handle 1 is displaced outward relative to the optical interface end 31, that is, the second end of the lever 2 descends, the handle 1 still needs to retract to its original position and restore the second end of the lever 2 to rise again. Therefore, a spring 314 is selected to be arranged in the guiding groove 313 at the upper end of the optical interface end 31, so as to apply a continuous inward abutting force to the barrier wall 111, ensuring that when the handle 1 is not subjected to an artificial external force, the barrier wall 111 can returns to its original position due to the elastic restoring force of the spring 314. It should be noted that the spring 314 should not be limited to be arranged in the guiding groove 313 at the upper end of the optical interface end 31. The same grooves can also be arranged on both sides of the optical interface end 31, and the spring 314 can be arranged to achieve the same effect. On the other hand, in order to facilitate the installation of the spring 314, in this embodiment, a mounting hole is provided above the guiding groove 313 in the enclosure frame 11, which is configured to insert the spring 314 into the guiding groove 313 from the mounting hole after the enclosure frame 11 is installed on the surface of the optical interface end 31.

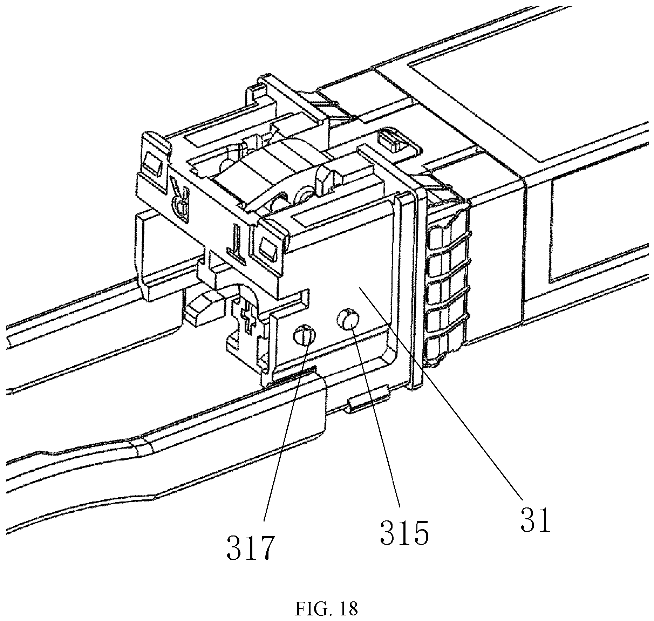

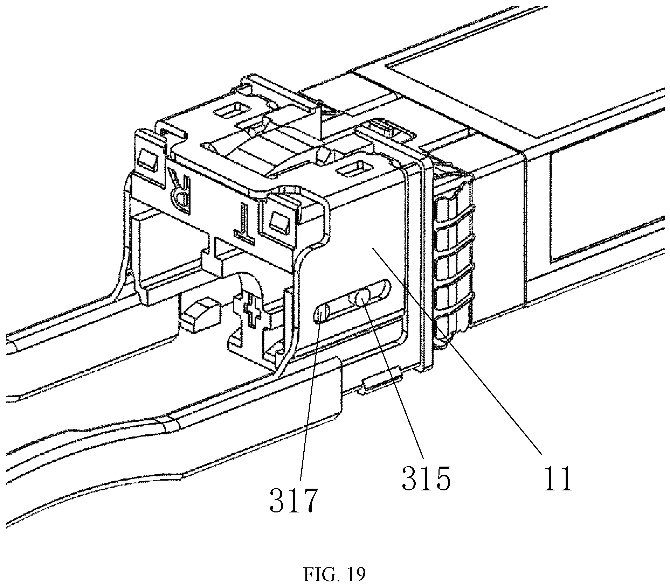

It is worth mentioning that due to the fact that the handle 1 may also be subjected to upward or downward tension in other situations, when the handle 1 is subjected to inclined upward or downward tension, in order to avoid the turning position of the enclosure frame 11 from getting stuck by the optical interface end 31, in this embodiment, the turning position of the enclosure frame 11 is connected in a relatively wide and strong way to avoid the above situation. In addition, this embodiment also provides a preferred design for the possible jamming phenomenon that may occur when the handle 1 is subjected to inclined upward or downward tension, as shown in Figures 18 and 19. At least one limit pivot 317 is also provided on each of the two side of the optical interface end 31, and the limit pivot 317 is located at the same horizontal height as the bump 315. The limit pivot 317 and the bump 315 are matched together inside the guiding hole 112. At the same time, the length of the guiding hole 112 is longer than its length when the limit pivot 317 is not originally provided, thereby ensuring that when the handle 1 is being pulled back and forth, the limit pivot 317 and the bump 315 are capable of moving within the guiding hole 112; under the joint action of the limit pivot 317 and the bump 315, the guiding hole 112 and the enclosure frame 11 are vertically limited to prevent the handle 1 from getting stuck when being pulled at a certain angle.

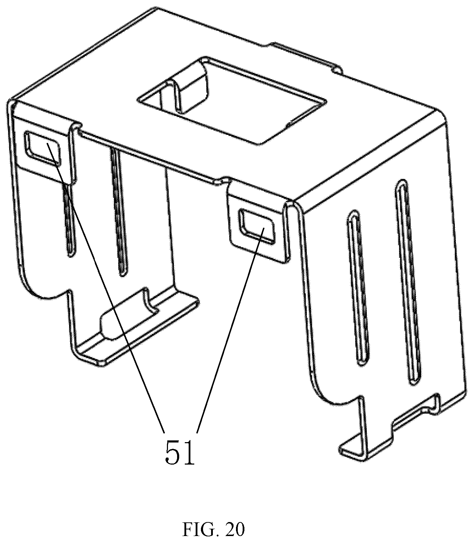

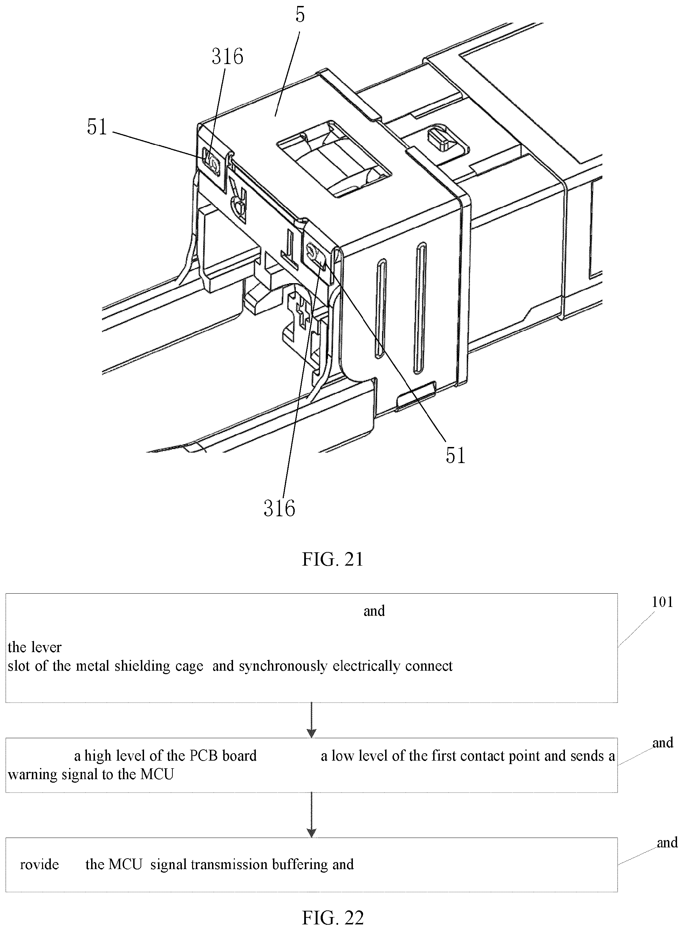

As shown in Figures 20 and 21, the upper end of the enclosure frame 11 is also provided with a cover plate 5, the end face of which is provided with a matching hole 51, and the end face of the optical interface end 31 is provided with a corresponding inclined bump 316 which is matched with the matching hole 51 to fix the cover plate 5, wherein the cover plate 5 is configured to cover the upper end of the enclosure frame 11 and the lever 2 to prevent them from falling off from the optical interface end 31.

In addition, in this embodiment, the handle 1 can be provided as a rotating handle 1 in addition to a straight handle 1 with a long straight handle, which can also achieve corresponding locking and unlocking functions.

### Embodiment 2

On the basis of Embodiment 1, Embodiment 2 of the present disclosure provides a method for using an optical module with an unlock warning function, which demonstrates the corresponding locking and unlocking of the optical module during its insertion and unplugging, as well as the implementation process of the corresponding warning for unlocking in actual application scenarios. The method comprises:

In step 101, the handle 1 is guided to move outward relative to the base 3, and the connecting rod 12 moves inside the inclined groove 21, lifting the first end of the lever 2 and synchronously descending the second end of the lever 2, then unlocking the chamfer 22 on the upper surface of the second end of the lever 2 with the slot of the metal shielding cage, and synchronously electrically connecting the first contact point 23 on the lower surface of the second end of the lever 2 to the PCB board 42.

In this embodiment, the guiding displacement of the handle 1 relative to the base 3 can be achieved by pulling the handle 1 outward or inward relative to the base 3 in a horizontal direction, or by pulling the handle 1 outward or inward at a predetermined angle relative to the horizontal direction, wherein the predetermined angle cannot exceed 15 degrees.

In step 102, a low level of the first contact point 23 lowers down a high level of the PCB board 42 and sends a warning signal to the MCU.

In step 103, the MCU provides signal transmission buffering and/or transmission interruption capabilities.

It should also be noted that the warning signal can be transmitted to both the host at the electrical interface end and the host at the optical interface end. However, in this embodiment, considering that the host at the optical interface end is usually farer away, causing that the transmission efficiency and actual implementation effect are not as good as transmitting to the host at the electrical interface end. Therefore, in this embodiment, the host at the electrical interface end is chosen to be the host for warning processing.

The structure of the optical module with an unlock warning function in this embodiment has been described in embodiment 1 and will not be repeated here.

The above descriptions are only preferred embodiments of the present disclosure and not intended to limit the present disclosure. Any modifications, equivalent substitutions, improvements, etc. made within the spirit and principles of the present disclosure should be included in the scope of protection of the present disclosure

## Claims

1. An optical module with an unlock warning function, **characterized by** comprising a handle (1), a lever (2), a base (3), and a PCB assembly (4), wherein:
the handle (1) is slidably and guidably connected with the base (3), and a connecting rod (12) is provided on the handle (1);
the lever (2) is pivoted to the base (3); a first end of the lever (2) is provided with an inclined groove (21), inside which the connecting rod (12) is located; an upper surface of a second end of the lever (2) is provided with a chamfer (22) which is configured to lock with a slot of a metal shielding cage, and a lower surface of the second end of the lever (2) is provided with a first contact point (23);
the PCB assembly (4) is arranged inside the base (3) and below the second end of the lever (2);
when the handle (1) is guided to move outward relative to the base (3), the connecting rod (12) lifts an upper end of the inclined groove (21), whereby the first end rises and the second end descends, enabling the chamfer (22) to unlock the slot of the metal shielding cage and bringing the first contact point (23) to engage with the PCB assembly (4) to trigger an unlock warning.

2. The optical module with an unlock warning function according to claim 1, **characterized in that** two ends of the base (3) are respectively an optical interface end (31) and an electrical interface end, and the handle (1) is connected to the optical interface end (31) for providing a handle for applying a force when plugging and unplugging the optical module;
when the handle (1) is connected to the optical interface end (31), the connecting rod (12) is located at an upper end of the optical interface end (31).

3. The optical module with an unlock warning function according to claim 2, **characterized in that** the lever (2) is pivoted to the upper end of the optical interface end (31), and the first end of the lever (2) faces the handle (1), while the second end of the lever (2) faces away from the handle (1);
the inclined groove (21) is arranged at an end face of the first end of the lever (2) and inclined downward at a predetermined angle relative to a horizontal direction, and a groove depth of the inclined groove (21) increases towards a middle of the lever (2); and
the connecting rod (12) is located inside the inclined groove (21).

4. The optical module with an unlock warning function according to claim 1, **characterized in that** the chamfer (22) is located on the upper surface of the second end of the lever (2), and a side of the chamfer (22) facing an inner side of the base (3) is an inclined surface, while a side of the chamfer (22) facing an outer side of the base (3) is a vertical surface;
when an inward force is applied to the handle (1) to insert the optical module into the slot of the metal shielding cage, an upper slot wall of the slot of the metal shielding cage advances along the inclined surface of the chamfer (22), pressing the second end of the lever (2) downward;
when the chamfer (22) fully enters the slot of the metal shielding cage, the second end of the lever (2) tilts upward and rebounds, and the vertical surface of the chamfer (22) abuts against an inner wall of the slot of the metal shielding cage, and the optical module is matched and locked with the slot of the metal shielding cage.

5. The optical module with an unlock warning function according to claim 1, **characterized in that** the first contact point (23) is arranged on the lower surface of the second end of the lever (2).

6. The optical module with an unlock warning function according to claim 1, **characterized in that** the first contact point (23) is a metal disc.

7. The optical module with an unlock warning function according to claim 1, **characterized in that** the PCB assembly (4) is arranged below the second end of the lever (2).

8. The optical module with an unlock warning function according to claim 1, **characterized in that** the PCB assembly (4) comprises a contact pad (41) and a PCB board (42), wherein:
an upper surface of the contact pad (41) is provided with a second contact point (43), which is located below the first contact point (23), and is electrically connected to the PCB board (42) through a metal strip (44);
when the second end descends, the first contact point (23) comes into contact with the first contact point (43), and the first contact point (23) becomes electrically connected to the PCB board (42).

9. The optical module with an unlock warning function according to claim 8, **characterized in that** an optical interface component is connected to a lower surface of the PCB board (42) and is arranged at a lower end of the PCB board (42), and the contact pad (41) is arranged in a gap between two optical interfaces.

10. The optical module with an unlock warning function according to claim 8, **characterized in that** the contact pad (41) is arranged on an inner surface of the base (3) and is vertically aligned below the first contact point (23); the second contact point (43) is wired inside the contact pad (41), extending to a side wall of the contact pad (41), and is connected to the PCB board (42) through an FPC flexible circuit board from the side wall of the contact pad (41); and the PCB board (42) is provided with a corresponding warning module, to which the FPC flexible circuit board is wired on the PCB board (42) to connect.

11. The optical module with an unlock warning function according to claim 8, **characterized in that** the contact pad (41) is made of an insulating material.

12. The optical module with an unlock warning function according to claim 8, **characterized in that** the second contact point (43) is made of a conductive material.

13. The optical module with an unlock warning function according to claim 1, **characterized in that** the lever (2) being pivoted to the base (3), specifically comprises:
the lever (2) is provided with rotating shafts (24) on both sides;
one end of the base (3) is an optical interface end (31) which is configured to slidably and guidably connect with the handle (1), and an upper surface of the optical interface end (31) is provided with a clearance cavity (311), with U-shaped recesses (312) provided on both sides of the inner wall of the clearance cavity (311);
the lever (2) is arranged inside the clearance cavity (311), with the rotating shaft (24) located in the U-shaped recess (312), and the first end of the lever (2) faces away from the PCB assembly (4), while the second end of the lever (2) faces towards the PCB assembly (4).

14. The optical module with an unlock warning function according to claim 13, **characterized in that** the rotating shaft (24) is cylindrical and arranged on both sides of the lever (2) near the middle; the clearance cavity (311) is arranged at a middle of an upper end of the optical interface end (31);
wherein an outer side of the optical interface end (31) refers to a side where an optical interface is connected to an external optical fiber, and an inner side of the optical interface end (31) refers to a side facing inside of the optical module.

15. The optical module with an unlock warning function according to claim 1, **characterized in that** the first end of the lever (2) being provided with an inclined groove (21), specifically comprises:
the inclined groove (21) is located on an end face of the first end of the lever (2) and communicates with both sides of the lever (2), with a depth of the inclined groove (21) increasing towards the middle of the lever (2), and the inclined groove (21) is inclined downward relative to a horizontal plane;
when the handle (1) is guided to move relative to the base (3), the connecting rod (12) slides in the inclined groove (21), driving the first end of the lever (2) to tilt upward or downward.

16. The optical module with an unlock warning function according to claim 15, **characterized in that** when the handle (1) is pulled outward, the handle (1) exerts a force on the first end of the lever (2) to lift it up, and the connecting rod (12) of the handle (1) is arranged in a first end of the inclined groove (21), with an opening of the inclined groove (21) located on the first end face of the lever (2), a groove depth of the inclined groove (21) pointing toward a center of the inclined groove (21), and the inclined groove (21) tilting downward;
when the connecting rod (12) moves outward in a horizontal direction, the connecting rod (12) abuts against an upper groove surface of the inclined groove (21), and the first end of the lever (2) tilts upward until the groove depth of the inclined groove (21) is oriented parallel to the horizontal plane, and the connecting rod (12) slides from an inner end to an outer end of the inclined groove (21).

17. The optical module with an unlock warning function according to claim 1, **characterized in that** the handle (1) being slidably and guidably connected with the base (3), specifically comprises that:
one end of the handle (1) is a closure frame (11), which is muff-coupled to an optical interface end (31) of the base (3);
an upper end face of the enclosure frame (11) is provided with barrier walls (111) on both sides, and an upper surface of the optical interface end (31) is provided with guiding grooves (313) on both sides, with the barrier walls (111) inserted into the guiding grooves (313), wherein when the enclosure frame (11) is guided to move relative to the optical interface end (31), the barrier walls (111) slide within the guiding grooves (313).

18. The optical module with an unlock warning function according to claim 17, **characterized in that** a spring (314) is positioned between a side of the barrier wall (111) facing an outside of the handle (1) and an inner wall of the guiding groove (313).

19. The optical module with an unlock warning function according to claim 17, **characterized in that** bumps (315) are further provided on both sides of the optical interface end (31), and corresponding guiding holes (112) are provided on both sides of the enclosure frame (11), wherein when the enclosure frame (11) is muff-coupled to the optical interface end (31), the bumps (315) become matched with the guiding holes (112); and
when the enclosure frame (11) is guided to move relative to the optical interface end (31), the bump (315) moves in the guiding hole (112).

20. The optical module with an unlock warning function according to claim 17, **characterized in that** two support arms (113) are arranged opposite each other on an inner end face of the enclosure frame (11), and are inserted into the clearance cavity (311) at an upper end of the optical interface end (31), and the support arms (113) are provided with through holes thereon, which are configured to connect with two ends of the connecting rod (12).

21. The optical module with an unlock warning function according to claim 19, **characterized in that** the enclosure frame (11) comprises at least three surfaces, which are respectively two side surfaces and one top surface;
wherein the two side surfaces are located on both sides of the enclosure frame (11), and the top surface is located at an upper end of the enclosure frame (11), the two side surfaces are connected by the top surface; and the fixing of the enclosure frame (11) in vertical and horizontal directions is achieved through cooperation of the bumps (315) on the two sides with the guiding holes (112) on both sides of the optical interface end (31), and through cooperation of the barrier wall (111) on the top face with the guiding groove (313) on the upper end of the optical interface end (31), and through cooperation of the three faces.

22. The optical module with an unlock warning function according to claim 17, **characterized in that** a peripheral baffle is further provided on the inner periphery of the optical interface end (31) to retain the enclosure frame (11) and limit an internal position of the enclosure frame (11) at the optical interface end (31).

23. The optical module with an unlock warning function according to claim 18, **characterized in that** the spring (314) is provided in the guiding groove (313) at the upper end of the optical interface end (31), and exerts a continuous inward abutting force on the barrier wall (111), ensuring that when the handle (1) is not affected by an artificial external force, the barrier wall (111) returns to its original position due to an elastic recovery force of the spring (314); and
the enclosure frame (11) is provided with installation holes above the guiding groove (313).

24. The optical module with an unlock warning function according to claim 19, **characterized in that** at least one limit pivot (317) is provided on each of the two sides of the optical interface end (31), and is located at the same horizontal height as the bump (315) to be matched with the bump (315) within the guiding hole (112).

25. The optical module with an unlock warning function according to claim 17, **characterized in that** a cover plate (5) is further provided at the upper end of the enclosure frame (11), with a matching hole (51) provided on an end face of the cover plate (5), an end face of the optical interface end (31) is provided with a corresponding inclined bump (316) which matches with the matching hole (51) to fix the cover plate (5); and
the cover plate (5) is configured to cover the upper end of the enclosure frame (11) and the lever (2) to prevent them from falling off from the optical interface end (31).

26. A method of use of an optical module with an unlock warning function, applied to the optical module with an unlock warning function as claimed in any one of claims 1-25, **characterized in that** the method comprises:
guiding the handle (1) to move outward relative to the base (3), moving the connecting rod (12) within the inclined groove (21), whereby the first end of the lever (2) rises and the second end of the lever (2) synchronously descends, unlocking the chamfer (22) on the upper surface of the second end of the lever (2) with the slot of the metal shielding cage, and synchronously electrically connecting the first contact point (23) on the lower surface of the second end of the lever (2) with the PCB assembly (4);
lowering down a high level of the PCB assembly (4) by a low level of the first contact point (23) and transmitting a warning signal to an MCU;
performing signal transmission buffering and/or interruption by the MCU.
